# EUROPEAN PATENT SPECIFICATION

(11) **EP 1 439 641 B1**
(45) Date of publication and mention of the grant of the patent: **28.09.2011**
(21) Application number: 04000664.5
(22) Date of filing: 15.01.2004
(51) Int. Cl.: H04B 7/185

(54) **Bi-directional transponder apparatus and method of operation**
Gerät und Verfahren zum Betrieb eines bidirektionalen Transponders
Appareil et méthode d'opération d'un transpondeur bidirectionnel

(30) Priority: 15.01.2003 US 342762
(43) Date of publication of application: 21.07.2004
(73) Proprietor: The Boeing Company, Chicago, IL 60606-1596 (US)
(72) Inventor: De La Chapelle, Michael, SE, Bellevue, WA 98008 (US); Jones, William J., Seattle, WA 98103 (US)
(74) Representative: Lindner, Michael

(56) References cited:
- EP-A- 0 707 389
- US-A- 4 941 199
- US-A1- 2002 087 992

## Description

### FIELD OF THE INVENTION

The present invention relates to radio frequency transponders, and more particularly to a single, bi-directional radio frequency transponder capable of facilitating simultaneous forward and return RF transmission links between a communications station and a mobile platform.

### BACKGROUND OF THE INVENTION

Presently there is growing interest in providing communication systems which are capable of handling RF communications between a ground based RF communications station and one or more mobile platforms, such as commercial aircraft, operating within a predefined coverage region. The base station is used to transmit information via RF signals to a space-based RF transponder, which typically comprises a satellite-based RF transponder. The satellite-based RF transponder transponds the information to the mobile platform which carries an RF transceiver. The operation of transmitting information from the base station to the mobile platform can be viewed as a "forward link" transmission. The satellite-based transponder is also used to transmit RF signals from the mobile platform to the base station. These transmissions can be viewed as "return link" transmissions. One such system is disclosed in U.S. Patent Application Serial No. 09/989,742, filed November 20, 2001.
Further communication systems are shown in documents US 2002/0087992 A1 and US 4,941,199 B.

With such communication systems as described above, it is common for the space-based transponder system to include one transponder dedicated to forming the forward link, and a separate transponder dedicated to forming the return link. Obviously, the use of two transponders to facilitate bi-directional communication between the base station and the mobile platform introduces increased costs over what would be borne if only a single transponder could be used to facilitate both the forward link and the return links as needed. Until the present time, however, the forward link transponder of a two transponder system has been operated such that its effective isotropic radiated power (i.e., "EIRP", but henceforth called simply "power") is at saturation, which is the maximum output power condition for a typical transponder. The reason for saturating the forward link transponder is that the information carrying capacity (henceforth referred to as "capacity") of the forward link is proportional to the transponder output power, and it is typically the objective of any communication system to maximize capacity. In technical terms, the forward link is considered to be transponder "power limited". Operating the forward link transponder at saturation, however, typically gives rise to the problem of small-signal suppression of the return link signals transmitted from the mobile platform to the base station, when both signals are input to the same transponder. The reason why return link signals transmitted towards the satellite from the mobile platforms are much lower amplitude than forward link signals transmitted to the satellite from a ground station is that mobile antennas are typically much smaller and use much lower power amplifiers compared to typical large and powerful ground station antennas. Thus, ground station antennas used for transmitting towards the satellite can typically saturate the forward link transponder, whereas small, low-power mobile antennas typically cannot. The return link capacity is not limited by the power of the transponder, but instead by the transmit power of the mobile antenna. In this situation, the return link capacity is limited by the channel bandwidth, and the return link is considered to be "frequency limited". As previously mentioned, operating a forward transponder at saturation is desirable for maximizing capacity, but such operation also causes suppression of the return link signals by a well known non-linear effect called "small signal suppression", which occurs in all saturated devices. To avoid suppression of the return link signal, the transponder must be operated in its linear range, which requires the transponder to be "backed off" from power saturation. Backing off from transponder saturation causes a loss of transmit power and a corresponding loss of forward link capacity. Thus, until the present time, use of separate transponders for the forward and return links has been viewed as the best approach for two-way satellite communication between a mobile terminal and a ground station. The drawback of the present approach is that a minimum of two transponders are required to establish two-way communication in a transponder coverage region, and satellite transponders are a very expensive resource. When establishing new communication service in a region, it is highly desirable to minimize start-up costs by using a single transponder rather than two.

Therefore, it would be especially desirable to provide a communication system by which a single, bi-directional, RF transponder could be used to handle both forward link and return link transmissions without introducing an unacceptable loss of capacity on either link. More succinctly, there is an economic advantage to establishing communication services in a region with a single transponder, without reducing the efficiency (cost per bit) that is achieved when operating with two transponders. In effect, the use of a single, bi-directional, space-based transponder would allow the operation of a communications system in those geographic regions where RF connectivity between a base station and a mobile platform is desired, but where the level of use of such a system may not necessarily warrant the initial expenditure of a dual transponder system.

### SUMMARY OF THE INVENTION

The present invention is directed to a bi-directional communication system employing a single, bi-directional transponder. The single, bi-directional transponder has its overall bandwidth segmented into distinct, non-overlapping first and second portions frequency bands. One portion is dedicated to facilitating forward link (FL) transmissions while the other portion is dedicated to facilitating return link (RL) transmissions. The power output level of the transponder is further set to a predetermined power level that is below saturation of the power output of the transponder. In one preferred form, the predetermined power level is set 3 dB below saturation.

Segmenting the transponder bandwidth into distinct first and second, non-overlapping portions, and reducing the output of the transponder to the predetermined power level allows forward link signals to be transmitted without causing significant small signal suppression of the return link signals. While the reduction in power output of the transponder does produce a reduction in the forward link data rate (in proportion to the transponder output "back-off"), the forward link transponder power reduction enables the return link to share the transponder with little or no performance degradation.

In a preferred form the RF signals transmitted over the forward link are spread via a suitable spreading scheme to maintain a total power spectral density (PSD) of the transmitted signals below a predefined PSD limit set by governmental regulatory agencies concerned with management of the radio spectrum, or informally negotiated between satellite owners and operators. Signals transmitted by the mobile platform over the return link are also preferably spread by a suitable spreading scheme such as non-overlapped frequency division multiplexing (FDM), overlapped FDM, time division multiple access (TDMA) or code division multiple access (CDMA).

The ability to provide a transponder system which requires only a single, bi-directional transponder to facilitate bi-directional communications between the ground-based station and the mobile platform represents a significant cost reduction in the overall communications system for coverage regions where demand is light. This significant cost reduction enables a communications system to be implemented in geographic regions where the limited degree of revenue that could be generated from usage of the transponder system would not be enough to offset the initial cost of a dual-transponder system.

Further areas of applicability of the present invention will become apparent from the detailed description provided hereinafter. It should be understood that the detailed description and specific examples are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 is a prior art, simplified schematic representation of a prior art, dual transponder system for facilitating communications between a ground based communication station and a mobile platform such as an aircraft;

Figure 2 is a simplified diagram of a communications system in accordance with the present invention in which a single, bi-directional transponder is utilized for handling forward and return link communications between the ground based communications station and the mobile platform;

Figure 3 is a simplified diagram of the segmenting of the overall bandwidth of the single, bi-directional transponder of the present invention;

Figure 4 is an exemplary graph of the transponder effective isotropic radiated power (EIRP) vs. ground station transmit EIRP, illustrating an operating point that causes a 3 dB reduction from saturation of the output power level (output back-off) of the single, bi-directional transponder of the present invention;

Figure 5 is an exemplary frequency plan (the units are MHz) for several different satellite-based transponders presently orbiting the earth; and

Figure 6 is a chart illustrating the performance difference between a prior art, dual transponder system and the single, bi-directional transponder, assuming that the forward link signal is backed-off by 3 dB for bi-directional operation in accordance with the present invention and that the forward link transponder is operated at saturation for the dual transponder (prior art) configuration.

### DETAILED DESCRIPTION OF THE PREFERRED EMBODIMENTS

The following description of the preferred embodiment(s) is merely exemplary in nature and is in no way intended to limit the invention, its application, or uses.

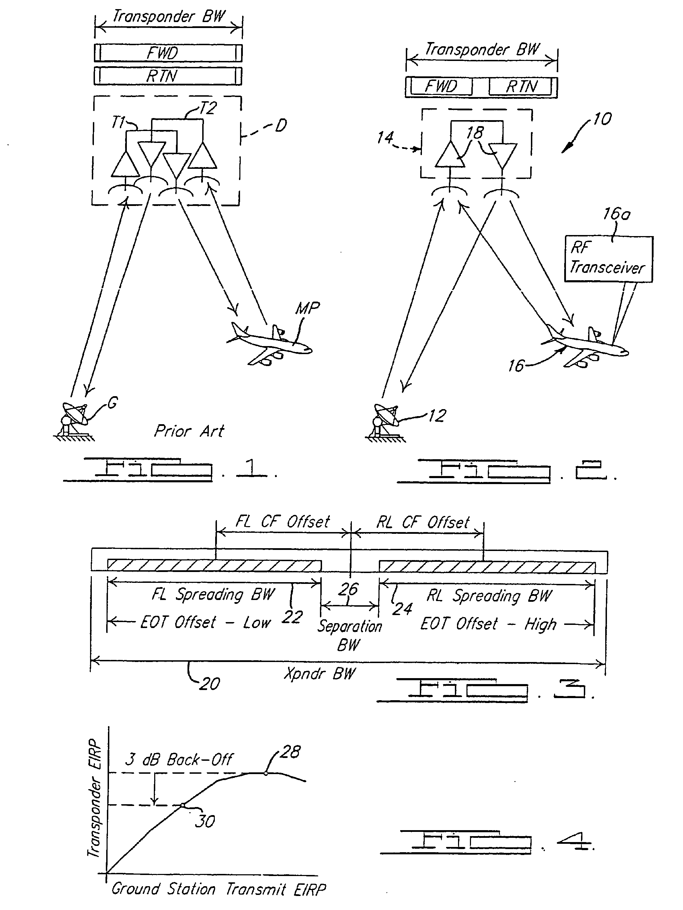

Referring to Figure 1, there is shown a prior art, simplified diagram of a ground-based communications system "G" in communication with a mobile platform "MP" via a conventional, dual transponder system "D". A dedicated forward link transponder T1 is used to facilitate a forward link (FL) between the ground station and the mobile platform, while a separate, dedicated transponder T2 is used to facilitate a separate return link (RL). The use of two dedicated transponders effectively doubles the cost of the transponder system D over what would be incurred with the implementation of a single, bi-directional transponder.

Referring now to Figure 2, a communications system 10 in accordance with a preferred embodiment of the present invention is illustrated in highly simplified form. The system 10 includes a ground-based, radio frequency (RF) communications station 12, a single, bi-directional transponder system 14 and a mobile platform 16 having an on-board RF transceiver system 16a. The communications station 12 transmits forward link signals to the transponder system 14 which are relayed to the RF transceiver 16a of the mobile platform 16. RF signals transmitted by the RF transceiver 16a from the mobile platform 16 form return links signals that are transponded by the transponder system 14 to the communications station 12. It will be appreciated that while the mobile platform 16 is depicted as an aircraft, that the mobile platform could just as readily form a bus, ship, train or other moving vehicle. Similarly, while the communications station 12 is illustrated as a ground-based facility, this component could just as readily be deployed on a mobile platform as well. The bi-directional transponder system 14 typically is provided on a satellite operating in geosynchronous orbit over a predefined coverage region to provide continuous RF connectivity between the communications station 12 and the mobile platform 16 as the mobile platform travels within the predefined coverage region.

With further reference to Figure 2, the transponder system 14 includes a single, bi-directional transponder 18. The overall bandwidth of transponder 18 is segmented into distinct, non-overlapping first and second segments. Put differently, the bandwidth of transponder 18 is partitioned into two, non-overlapping portions. With reference to Figure 3, a graphic representation of the segmenting of the transponder bandwidth is provided. The overall transponder bandwidth is represented by line 20. The bandwidth allocated to forward link (FL) transmissions is represented by line 22. The bandwidth allocated for return link (RL) transmissions is indicated by line 24. It will be noted that a small amount of optional bandwidth termed the "separation" bandwidth is indicated by line 26. This separation bandwidth 26 further insures that the high amplitude forward link signal 22 does not interfere with the relatively low amplitude signal 24. Note that the portion of the transponder bandwidth allocated to the return link 24 may be further subdivided into individual frequency division multiple access (FDMA) channels, but a preferred embodiment has a return link single channel that shared by multiple aircraft using Code Division Multiple Access (CDMA). It will also be appreciated that the center frequency for the forward and return links are offset from the center of the overall transponder bandwidth, as indicated by the designations "FL CF Offsets" and "RL CF Offset" in Figure 3. Furthermore, the forward link bandwidth is offset slightly from the low edge of the overall transponder frequency bandwidth, as indicated by the designation "EOT Offset - Low", while the return link bandwidth is offset slightly from the high edge of the overall transponder bandwidth, as indicated by the designation "EOT Offset - High". The use of these two offsets from the low and high edges of the transponder bandwidth are desirable because transponder performance degrades at the upper and lower edges of the bandwidth.

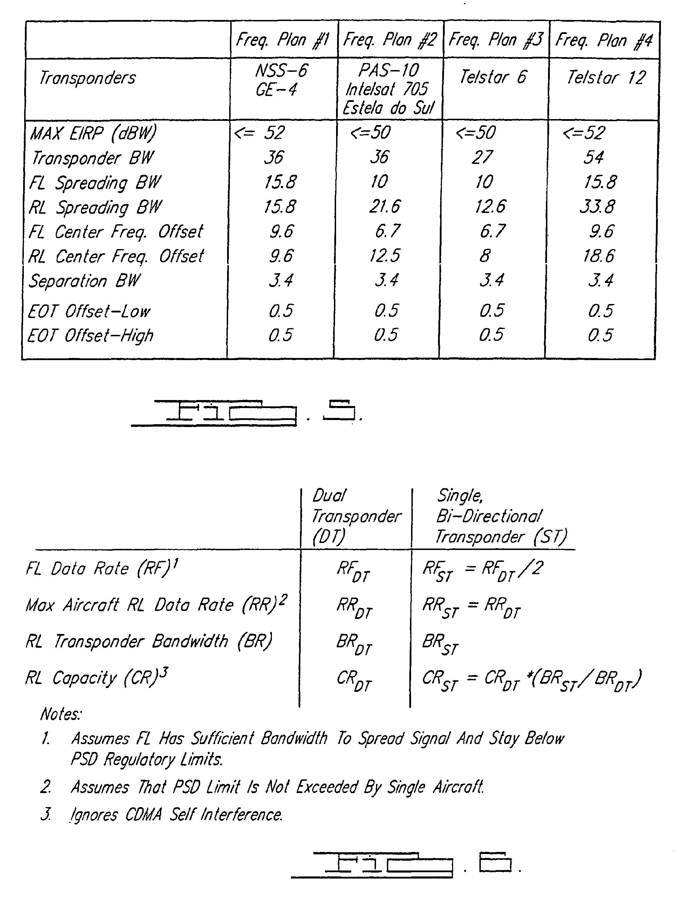

An important factor in utilizing the single transponder 18 to accommodate both forward link and return link transmissions without suffering small signal suppression of the return link signals is that the transponder output is reduced (i.e., backed off), by preferably 1 dB to 4 dB from saturation. This is illustrated in Figure 4. Point 28 represents the operating point for a conventional, dedicated, forward link transponder typically utilized in a system incorporating separate transponders for forward link and return link transmissions. The operating point for the transponder 18 is reduced below saturation by about 3 dB, as indicated by point 30. Reducing the transponder 18 output to about 3dB below saturation eliminates the risk of suffering significant suppression of the return link transmission from the aircraft 16 to the ground based communications station 12 when this signal is combined on the same transponder 18 with the stronger forward link signal from the communications station 12 to the mobile platform 16. The forward and return links further are operated on separate frequencies to implement the bi-directional operation of the transponder 18. In a preferred embodiment, signal spreading is incorporated with both the forward link and return link signals. Any suitable means of signal spreading or return link multiple access may be employed with the present invention. Examples of suitable multiple access methods include non-overlapped frequency division multiplexing (FDM), overlapped FDM, time division multiple access (TDMA), code division multiple access (CDMA), or hybrids thereof. As mentioned previously, the capacity of the return link portion of the bi-directional transponder 18 is proportional to the return link bandwidth. Thus, by partitioning the transponder 18 into the forward and return link portions, some capacity is sacrificed relative to what would be achieved from a transponder dedicated to return link operation (the prior art method). This trade-off is illustrated in Figure 6. Bi-directional operation of the present invention has the greatest advantage over dual transponder operation when the transponder bandwidth is wide and the required forward link bandwidth is small. It will also be appreciated that the peak return link data transmission rate from the mobile platform 16 is not affected by bi-directional operation of the transponder 18, given that the forward link signal is sufficiently backed-off to prevent small signal suppression of the return link.

With brief reference to Figure 5, an exemplary transponder frequency plan for bi-directional operation of the transponder 18 is illustrated. The forward link spreading bandwidth is determined by several considerations. First, the bandwidth must be spread sufficiently wide to keep the peak effective isotropic radiated power (EIRP) spectral density below the coordination limits for the satellite/transponder being used. Put differently, the peak EIRP spectral density needs to be spread to avoid interference with satellite/transponder systems orbiting in the vicinity of the transponder 18. For example, the peak EIRP for satellite AMC-4 (formerly GE-4) is 51 dBW. The coordination limit for the satellite is 13 dBW/4 KHz. Given a 3 dB transponder output back-off, the minimum required forward link spreading bandwidth is: 51 dBW - 3 dB - 13 dBW/4 KHz = 35 dB-4 KHz , which equals 12.6 MHz.

A second consideration is to only spread the forward link signal by that amount that is necessary to stay below the peak EIRP spectral density that is imposed by government regulatory requirements and any pre-existing satellite coordination agreements. Spreading the forward link signal more than necessary reduces the bandwidth, and hence capacity, available for the return link transmissions.

Referring briefly now to Figure 6, it can be seen that operation with a single bi-directional transponder is approximately as efficient (from a cost standpoint) in operation as a dual transponder system. For bi-directional operation, the forward link data rate is approximately halved when the transponder output back-off is 3 dB (a factor of 2). The table of Figure 6 assumes a 3 dB back-off. The return link capacity, which is proportional to the available return link bandwidth, is reduced relative to dual transponder capacity by the ratio of the bi-directional return link bandwidth divided by the total transponder bandwidth. For typical Ku-band transponders having bandwidths of 27MHz, 36MHz and 72 MHz, the return link capacity reduction is less than 50% using the numbers from Figure 6 for the exemplary commercial satellites listed in Figure 5. Therefore, the cost-per-bit for data transmitted by a single, bi-directional transponder is less than that of a dual transponder system because the cost is halved but both the forward link and return link capacity are each reduced by less than half.

The present invention thus allows implementation of a communications system between a base station and a mobile platform via a single, bi-directional, transponder. This significantly reduces the initial costs of implementing such a system because of the need for only a single, bi-directional transponder rather than the dual transponder system previously utilized. By segmenting the bandwidth of a single, bi-directional transponder into non-overlapping bandwidth segments, and by reducing the output of the single, bi-directional transponder by a predetermined amount, the single transponder is able to accommodate both forward link and return link transmissions without negatively impacting the relatively small, return link signals from the mobile platform. The requirement of only a single, bi-directional transponder thus enables implementation of a ground-based-to-mobile-platform communication system in those geographic regions where the level of anticipated use of the system may not be sufficient to justify the implementation of a dual transponder system, but would be sufficient to justify by a single, bi-directional transponder system because of the significantly reduced cost of such a system.

Briefly summarized, the present invention relates to a bi-directional radio frequency transponder apparatus and method of operation therefor. The single, bi-directional transponder has its bandwidth segmented into two distinct, non-overlapping frequency portions, one for handling forward link signals from a base station to a mobile platform and the other for handling return link signals from the mobile platform to the base station. The output of the transponder is reduced by at least about 1dB below saturation, and more preferably by about 1dB-3dB below saturation. This prevents suppression of the relative small return link signals in the presence of the much larger forward link signals. The overall cost of the transponder system is reduced by half over that of a conventional dual transponder system without significantly degrading forward link or return link capacity.

## Claims

1. A method for forming a bi-directional, radio frequency (RF) communications link between a mobile platform (16) as a first RF communications station, and a base station (12) as a second RF communications station, using a single, satellite-based transponder, comprising:
setting a power output of said transponder at a power output level that is below saturation of said power output of said transponder; segmenting a total bandwidth of said transponder into a first (22) and a second portion (24);
using said first bandwidth portion (22) to form a forward transmission link over which RF signals are transmitted from said second communications station to said first communications station; and
using said second bandwidth portion (24) to form a return transmission link over which RF signals are transmitted from said first communications station to said second communications station.

2. The method of claim 1, wherein setting said power output of said transponder comprises setting said power output to a level of at least about 1 dB below saturation of said power output of said transponder.

3. The method of claim 1, further comprising spreading said RF signals transmitted from said base station (12) to said transponder (18).

4. The method of claim 1, further comprising spreading said RF signals transmitted from said mobile platform (16) to said transponder (18).

5. The method of claim 1, further comprising using a plurality of mobile platforms (16) to communicate bi-directionally and simultaneously with said communication station (12) using said spaced-based transponder.

6. The method of claim 5, further comprising using at least one of code division multiple access (CDMA), and frequency division multiple access (FDMA), and time division multiple access (TDMA) to spread RF signals transmitted from said mobile platforms (16).

7. The method of claim 6, wherein a combination of at least two of CDMA, FDMA and TDMA signal spreading techniques are employed to spread said RF signals.

8. The method of claim 5 wherein using said mobile platforms (16) comprises using an aircraft, and wherein using said communication station comprises using a fixed ground station (12).

9. The method of claim 1, wherein said first portion (22) and said second portion (24) do not overlap.

10. The method of claim 1, wherein a separation bandwidth (26) is allocated between said first portion (22) and said second portion (24).

11. A space based, radio frequency (RF) transponder for facilitating a bi-directional communications link between a communications station (12) and a mobile platform (16) operating within a predefined geographic coverage region in which said communications station is located, said transponder (14, 18) being adapted to have a power output of said transponder (18) set at a predetermined power output level that is below saturation of said power output of said transponder (18), and
an overall bandwidth partitioned into first and second portions (22, 24), said first portion (22) forming a forward link transmission path from said communications station (12) to said mobile platform (16), and said second portion (24) forming a return link transmission path from said mobile platform (16) to said communications station (12).

12. The transponder of claim 11, wherein said power output level comprises a power level that is at least about 1dB below saturation of said power output.

13. The transponder of claim 11, wherein said first portion (22) and said second portion (24) do not overlap.

14. The transponder of claim 11, wherein a separation bandwidth (26) is allocated between said first portion (22) and said second portion (24).

15. A communications system, comprising:
a radio frequency (RF) communications station (12) located within a predefined geographic coverage region;
a mobile platform (16) carrying a RF transceiver (14), said mobile platform (16) operating within said geographic coverage region; and
a space-based RF transponder (18) according to claims 11 to 13 orbiting the earth above said predefined geographic coverage region.

16. The system of claim 15, wherein said mobile platform (16) comprises an aircraft.

17. The system of claim 15, wherein said RF communications station (12) comprises a ground based RF communications station.

18. The system of claim 15, wherein said RF communications station (12) uses a spreading scheme to spread RF signals transmitted therefrom.

19. The system of claim 15, wherein said RF transceiver (16a) on said mobile platform (16) uses a spreading scheme to spread RF signals transmitted therefrom.

## Patentansprüche

1. Verfahren zur Ausbildung einer bidirektionalen Hochfrequenz (HF)-Kommunikationsverbindung zwischen einer mobilen Plattform (16) als einer ersten HF-Kommunikationsstation und einer Basisstation (12) als einer zweiten HF-Kommunikationsstation unter Verwendung eines einzigen satellitenbasierten Transponders, mit den folgenden Schritte:
Festsetzen einer Ausgangsleistung des Transponders auf ein Ausgangsleistungsniveau, das unterhalb einer Sättigung der Ausgangsleistung des Transponders liegt; Segmentieren einer Gesamtbandbreite des Transponders in einen ersten (22) und einen zweiten Abschnitt (24);
Verwenden des ersten Bandbreitenabschnitts (22), um eine Sendeübertragungsverbindung auszubilden, über die HF-Signale von der zweiten Kommunikationsstation zu der ersten Kommunikationsstation übertragen werden; und
Verwenden des zweiten Bandbreitenabschnitts (24), um eine Empfangsübertragungsverbindung auszubilden, über die HF-Signale von der ersten Kommunikationsstation zu der zweiten Kommunikationsstation übertragen werden.

2. Verfahren nach Anspruch 1, wobei das Festsetzen der Ausgangsleistung des Transponders das Festsetzen der Ausgangsleistung auf ein Niveau von zumindest etwa 1 dB unterhalb der Sättigung der Ausgangsleistung des Transponders aufweist.

3. Verfahren nach Anspruch 1, des Weiteren mit einem Schritt des Spreizens der HF-Signale, die von der Basisstation (12) zu dem Transponder (18) übertragen werden.

4. Verfahren nach Anspruch 1, des Weiteren mit einem Schritt des Spreizens der HF-Signale, die von der mobilen Plattform (16) zu dem Transponder (18) übertragen werden.

5. Verfahren nach Anspruch 1, des Weiteren mit einem Schritt des Verwendens einer Mehrzahl von Mobilplattformen (16), um bidirektional und gleichzeitig mit der Kommunikationsstation (12) unter Verwendung des weltraumbasierten Transponders zu kommunizieren.

6. Verfahren nach Anspruch 5, des Weiteren mit einem Schritt des Verwendens zumindest eines von Codemultiplex-Vielfachzugriff (CDMA), und Frequenzmultiplex-Vielfachzugriff (FDMA), und Zeitmultiplex-Vielfachzugriff (TDMA), um die von der Mobilplattform (16) übertragenen HF-Signale zu spreizen.

7. Verfahren nach Anspruch 6, wobei eine Kombination von zumindest zwei der CDMA-, FDMA- und TDMA-Signalspreizungstechniken angewendet werden, um die HF-Signale zu spreizen.

8. Verfahren nach Anspruch 5, wobei das Verwenden der mobilen Plattform (16) das Verwenden eines Luftfahrzeugs aufweist, und wobei das Verwenden der Kommunikationsstationen das Verwenden einer festen Bodenstation (12) aufweist.

9. Verfahren nach Anspruch 1, wobei der erste Abstand (22) und der zweite Abstand (24) einander nicht überlappen.

10. Verfahren nach Anspruch 1, wobei eine Trennbandbreite (26) zwischen dem ersten Abschnitt (22) und dem zweiten Abschnitt (24) zugewiesen ist.

11. Weltraumbasierter Hochfrequenz (HF)-Transponder zum Erleichtern einer bidirektionalen Kommunikationsverbindung zwischen einer Kommunikationsstation (12) und einer mobilen Plattform (16), die innerhalb eines vorbestimmten geografischen Bedeckungsbereichs, in dem die Kommunikationsstation angeordnet ist, arbeitet, wobei der Transponder (14, 18) dazu ausgelegt ist,
eine Ausgangsleistung des Transponders (18) aufweisen, die auf ein vorbestimmtes Ausgangsleistungsniveau festgesetzt ist, das unterhalb einer Sättigung der Ausgangsleistung des Transponders (18) ist, und
eine Gesamtbandbreite in einen ersten und einen zweiten Abschnitt (22, 24) partitioniert ist, wobei der erste Abschnitt (22) einen Sendeverbindungsübertragungsweg von der Kommunikationsstation (12) zu der Mobilplattform (16) ausbildet, und der zweite Abschnitt (24) einen Empfangsverbindungsübertragungsweg von der mobilen Plattform (16) zu der Kommunikationsstation (12) ausbildet.

12. Transponder nach Anspruch 11, wobei das Ausgangsleistungsniveau ein Leistungsniveau aufweist, das zumindest ungefähr 1 dB unterhalb der Sättigung der Ausgangsleistung ist.

13. Transponder nach Anspruch 11, wobei der erste Abschnitt (22) und der zweite Abschnitt (24) einander nicht überlappen.

14. Transponder nach Anspruch 11, wobei eine Trennbandbreite (26) zwischen dem ersten Abschnitt (22) und dem zweiten Abschnitt (24) zugewiesen ist.

15. Kommunikationssystem, mit:
einer Hochfrequenz (HF)-Kommunikationsstation (12), die innerhalb eines vorbestimmten geografischen Bedeckungsbereichs angeordnet ist;
einer mobilen Plattform (16), die eine HF-Sendeempfangsanlage (14) trägt, wobei die mobile Plattform (16) innerhalb des geografischen Bedeckungsbereichs arbeitet; und
einem weltraumbasierten HF-Transponder (18) nach einem der Ansprüche 11 bis 13, der die Erde über dem vorbestimmten geografischen Bedeckungsbereich umrundet.

16. System nach Anspruch 15, wobei die mobile Plattform (16) ein Luftfahrzeug aufweist.

17. System nach Anspruch 15, wobei die HF-Kommunikationsstation (12) eine bodenbasierte HF-Kommunikationsstation aufweist.

18. System nach Anspruch 15, wobei die HF-Kommunikationsstation (12) ein Spreizschema dazu verwendet, von ihr übertragene HF-Signale zu spreizen.

19. System nach Anspruch 15, wobei das HF-Sendeempfangsgerät (16a) in der mobilen Plattform (16) ein Spreizschema dazu verwendet, von ihr übertragene HF-Signale zu spreizen.

## Revendications

1. Procédé de formation d'une liaison de communications bidirectionnelles à fréquences radioélectriques (RF) entre une plate-forme mobile (16) comme première station de communications RF, et une station de base (12) comme second station de communications RF, en utilisant un transpondeur unique satellitaire, comprenant :
le réglage d'une sortie de puissance dudit transpondeur à un niveau de sortie de puissance inférieur à la saturation de ladite sortie de puissance dudit transpondeur ; la segmentation d'une largeur de bande totale dudit transpondeur en une première (22) et une seconde (24) partie ;
l'utilisation de ladite première partie de largeur de bande (22) pour former une liaison de transmission aller sur laquelle les signaux RF sont transmis depuis ladite seconde station de communications vers ladite première station de communications ; et
l'utilisation de ladite seconde partie de largeur de bande (24) pour former une liaison de transmission retour sur laquelle les signaux RF sont transmis depuis ladite première station de communications vers ladite seconde station de communications.

2. Procédé selon la revendication 1, dans lequel le réglage de ladite sortie de puissance dudit transpondeur comprend le réglage de ladite sortie de puissance à un niveau d'au moins environ 1dB en dessous de la saturation de ladite sortie de puissance dudit transpondeur.

3. Procédé selon la revendication 1, comprenant en outre l'étalement desdits signaux RF transmis depuis ladite station de base (12) vers ledit transpondeur (18).

4. Procédé selon la revendication 1, comprenant en outre l'étalement desdits signaux RF transmis depuis ladite station mobile (16) vers ledit transpondeur (18).

5. Procédé selon la revendication 1, comprenant en outre l'utilisation d'une pluralité de plates-formes mobiles (16) pour communiquer bidirectionnellement et simultanément à ladite station de communications (12) au moyen dudit transpondeur spatial.

6. Procédé selon la revendication 5, comprenant en outre l'utilisation d'au moins l'un d'un accès multiple par différence de code (CDMA), d'un accès multiple par répartition de fréquence (FDMA) et d'un accès multiple par répartition dans le temps (TDMA) pour étaler les signaux RF transmis depuis lesdites plates-formes mobiles (16).

7. Procédé selon la revendication 6, dans lequel une combinaison d'au moins des techniques d'étalement de signaux CDMA, FDMA et TDMA est employée pour étaler lesdits signaux RF.

8. Procédé selon la revendication 5, dans lequel l'utilisation desdites plates-formes (16) comprend l'utilisation d'un aéronef, et dans lequel l'utilisation de ladite station de communication comprend l'utilisation d'une station fixe terrestre (12).

9. Procédé selon la revendication 1, dans lequel ladite première partie (22) et ladite seconde partie (24) ne se chevauchent pas.

10. Procédé selon la revendication 1, dans lequel une largeur de bande de séparation (26) est attribuée entre ladite première partie (22) et ladite seconde partie (24).

11. Transpondeur à fréquences radioélectriques (RF) spatial pour faciliter une liaison de communications bidirectionnelles entre une station de communications (12) et une plate-forme mobile (16) opérant dans une région de couverture géographique prédéfinie dans laquelle se trouve ladite station de communications, ledit transpondeur (14, 18) étant adapté pour avoir une sortie de puissance dudit transpondeur (18) réglée à un niveau de sortie de puissance prédéterminé inférieur à la saturation de ladite sortie de puissance dudit transpondeur (18), et une largeur de bande totale divisée en des première et seconde parties (22, 24), ladite première partie (22) formant un chemin de transmission de liaison aller depuis ladite station de communications (12) vers ladite plate-forme mobile (16), et ladite seconde partie (24) formant un chemin de transmission de liaison retour depuis ladite plate-forme mobile (16) vers ladite station de communications (12).

12. Transpondeur selon la revendication 11, dans lequel ledit niveau de sortie de puissance comprend un niveau de puissance d'au moins environ 1dB en dessous de la saturation de ladite sortie de puissance.

13. Transpondeur selon la revendication 11, dans lequel ladite première partie (22) et ladite seconde partie (24) ne se chevauchent pas.

14. Transpondeur selon la revendication 11, dans lequel une largeur de bande de séparation (26) est attribuée entre ladite première partie (22) et ladite seconde partie (24).

15. Système de communications, comprenant:
une station de communications à fréquences radioélectriques (RF) (12) située dans une région de couverture géographique prédéfinie ;
une plate-forme mobile (16) portant un émetteur-récepteur RF (14), ladite plate-forme mobile (16) opérant dans ladite région de couverture géographique ; et
un transpondeur RF spatial (18) selon les revendications 11 à 13 en orbite autour de la Terre au-dessus de ladite région de couverture géographique prédéfinie.

16. Système selon la revendication 15, dans lequel ladite plate-forme mobile (16) comprend un aéronef.

17. Système selon la revendication 15, dans lequel ladite station de communications RF (12) comprend une station de communications RF terrestre.

18. Système selon la revendication 15, dans lequel ladite station de communications RF (12) utilise un plan d'étalement pour étaler les signaux RF qu'elle émet.

19. Système selon la revendication 15, dans lequel ledit émetteur-récepteur (16a) sur ladite plate-forme mobile (16) utilise un plan d'étalement pour étaler les signaux RF qu'il émet.
